# EUROPEAN PATENT SPECIFICATION

(11) **EP 1 964 785 B1**
(45) Date of publication and mention of the grant of the patent: **26.08.2015**
(21) Application number: 07254790.4
(22) Date of filing: 12.12.2007
(51) Int. Cl.: B65D 30/00, B65D 75/52

(54) **Packaging**
Verpackung
Emballage

(30) Priority: 13.12.2006 GB 0624800; 27.07.2007 GB 0714618
(43) Date of publication of application: 03.09.2008
(73) Proprietor: Cornelius Beverage Technologies Limited, Brighouse, West Yorkshire HD6 4XL (GB)
(72) Inventor: Trotman, Stephen Craig, Christchurch Dorset BH23 3SS (GB); Holdway, Andrew John, Trowbridge, Wiltshire BA14 8UT (GB); Burnett, Martin Desmond, Wiltshire SN12 6UD (GB); Morse, Simon Edward, Oxford OX4 2ER (GB)
(74) Representative: Wightman, David Alexander

(56) References cited:
- EP-A1- 0 533 648
- EP-A2- 0 686 566
- DE-U1- 8 800 400
- GB-A- 2 419 584

## Description

This invention relates to the packaging and delivery of flowable bulk materials. The invention has particular application to a sleeve arranged to receive a pouch in which the flowable bulk material is contained as defined in the preamble of claim 1. Such a sleeve is known from EP-A-0533648.

The invention has application to a wide range of flowable bulk materials including, but not limited to, bulk flowable materials intended to be consumed such as beverages and other flowable food products such as soups, sauces, syrups, ice cream, sorbet and the like. For convenience the invention is described hereinafter with reference to the packaging and delivery of beverages but it will be understood that we do not intend to be limited thereto and that the invention has application that extends and includes any flowable bulk materials including products that can be consumed either directly or when added to another food product and products that are not intended to be consumed such as sun creams and the like.

Both alcoholic and non-alcoholic beverages are traditionally sold pre-packaged in plastic or glass bottles, cans or pre-filled cartons. They are sold through different retail outlets such as shops, bars, cafes and restaurants or through vending machines. There are a number of problems associated with the packaging traditionally used, primarily the amount of space required by a retailer to store the packaged beverages. The majority of retailers store beverages in refrigerated cabinets with a limited capacity. The shape of pre-packaged beverages, such as a bottle, is inefficient for storage thereby limiting the amount of stock, and therefore the range, that can be offered by the retailer. Furthermore, the inefficient storage shape of the packaging increases the space required for transport of the beverages. Pre-packaging a beverage before supplying to a retailer also means that the brand owner protects the profit in the branded beverage.

An additional problem is the large amount of energy consumed in keeping the cabinets refrigerated and there can also be problems with stock rotation. For example, most bars use refrigerators that are both stocked from the front and emptied from the front, often leaving beverages at the back of the cabinet for long periods of time, which can lead to waste. The packaging itself also generates a large amount of waste and this can result in problems associated with waste management and the disposal of waste containing a number of different materials.

It is known to provide a plastic pouch arranged to contain a beverage. A beverage can be dispensed into the pouch at the point of sale or, alternatively, the pouches can be provided pre-filled. However, the pouches can be unstable and difficult to handle, especially if containing a particularly hot or cold beverage. It may also prove difficult to sufficiently distinguish different brands of beverages.

In one aspect the invention provides a sleeve for a pouch for a flowable bulk material as defined claim 1. Preferred features of the sleeve are the subject of dependent claims 2 to 9. The invention also provides packaging for a flowable bulk material comprising the sleeve of claims 1 to 9 and a pouch received in the sleeve as defined in claim 10.

An indication of the contents of the pouch may be provided on the sleeve in which the pouch is received. The indication of the contents may be applied to the sleeve, for example by printing on the sleeve or by attaching a label to the sleeve. For example, apparatus for filling the pouch may include a printing station for printing details of the contents onto the sleeve or onto a label that is attached to the sleeve by adhesive or other suitable means. The filled pouch and printed sleeve may be dispensed separately and the pouch placed in the sleeve by hand. Alternatively, the filled pouch may be dispensed already within the printed sleeve. With this arrangement, the apparatus for filling the pouch and printing the sleeve may be combined or separate filling and printing apparatus may be provided.

In this way, blank sleeves or sleeves carrying information common to all products to be dispensed can be provided for labelling with specific details of the type of product to be dispensed into the pouch at the point of dispense. As a result, non-product specific sleeves can be supplied and the product specific information applied in response to selection of a particular product to be dispensed. This simplifies packaging of different products at the point of sale with resulting advantages for the retailer. Also the consumer benefits from the packaging of product dispensed at the point of sale thereby ensuring product freshness.

The pouch is preferably made of transparent or translucent material and the sleeve arranged so that, when the pouch is filled in the sleeve, the customer can see the contents of the pouch through a window as the pouch is being filled. This may add to the "theatre" of dispense, especially where dispense is accompanied by a change in the characteristics of the product in the pouch, for example where ice or other special effects are created in the product. In a preferred arrangement, the sleeve is provided with windows in front and rear panels. With this arrangement, the contents of the pouch can be illuminated with light from the side remote from the customer and this may further enhance the "theatre" of dispense. Alternatively or additionally, the sleeve may be provided with a reflective or other suitable surface onto which an image or other special effect can be displayed to the customer while dispensing a product to enhance the "theatre" of dispense. Alternatively or additionally, the sleeve may incorporate temperature responsive materials that change colour (thermochromic materials) or some other change to the appearance of the sleeve when a cold or hot product is added to the pouch thereby creating a visual effect to enhance the "theatre" of dispense.

In one embodiment, the sleeve comprises a flexible member made of materials such as paperboard materials, for example cardboard, especially corrugated cardboard. However, this is not essential and any one of a number of other suitable materials may be used including plastic and/or metallic film materials. The sleeve may comprise a single sheet of the material. The sheet of material may be divided into a plurality of panels and at least one panel may be fastened to another panel to define the cavity. Alternatively, the sheet of material may comprise a single panel, one part of which may be fastened to another to define the cavity. The material may be fastened to secure the sleeve in the erected condition using interlocking formations such as tabs, tongues and the like, or adhesive such as one or more adhesive stripes. Where provided, the adhesive stripe(s) may be protected by a removable cover strip until it is required to assemble the sleeve. It will be understood that any suitable fastening means or combination of fastening means may be employed. The erected sleeve may be self-supporting allowing the sleeve to stand on a surface while retaining a degree of flexibility such that the sides of the sleeve can be easily compressed thereby compressing the pouch to assist discharge of the product contained in the pouch. This may be particularly beneficial for products having a relatively high viscosity such as milkshakes or ice cream that can be squeezed out of the pouch by compressing the sleeve.

Alternatively, the sleeve comprises a rigid or semi-rigid member made of materials such as plastics, metals or elastomers, for example neoprene. The rigid or semi-rigid member may be formed by any suitable means such as injection moulding plastics or elastomers. The formed sleeve may be self-supporting capable of standing on a surface with the pouch supported therein and may provide a container such as a cup into which the contents of the pouch may be poured for consumption. Thus, the sleeve may serve as packaging for carrying the pouch with the product therein until it is desired to consume the product when the pouch can be removed from the sleeve and the contents emptied into the sleeve.

The sleeve may have an opening at one end such that the pouch can be inserted into the cavity in the sleeve. In one arrangement, the base of the sleeve is open allowing the sleeve to slide over the pouch. In another arrangement, the top of the sleeve is open allowing the pouch to be dropped into the sleeve. In a further arrangement, the sleeve may be assembled around the pouch, or the pouch may be inserted into a partially assembled sleeve. The pouch may be pre-filled before locating in the sleeve, or alternatively the pouch may be filled when in the sleeve.

The sleeve may further comprise means to retain the pouch in the sleeve. For example, where the base of the sleeve is open, the sleeve may include a panel, flap or projections arranged to extend across and at least partially close the base to support and retain the pouch in the sleeve. Alternatively or additionally, the sleeve may define an opening for a neck or spout of the pouch and the opening may be configured to engage the neck or spout to retain the pouch in the sleeve, for example the neck or spout may be a snap fit in the aperture. Alternatively or additionally, the sleeve may be provided with one or more adhesive regions that secure the pouch to the sleeve within the cavity. The adhesive regions may be provided with a removable cover strip until it is required to attach the pouch to the sleeve.

Preferably, the sides of the sleeve are tapered and may be tapered out towards the bottom of the sleeve. This arrangement results in a sleeve that opens out at the bottom to provide a stable base for standing the sleeve on a surface such as a table with the pouch located in the cavity.

Alternatively, or additionally, at least two of the panels may have a curved shape. For example, in one plane the sleeve may be narrower at a centre portion than at either the top or bottom to provide a more comfortable shape to hold.

Preferably, the material of the sleeve is thermally insulating to reduce heat transfer to or from the pouch. In this way chilled contents of the pouch remain cold and heated contents remain hot. In addition, the thermal insulation properties of the sleeve allow the pouch to be held comfortably when the contents of the pouch are chilled or heated.

The sleeve may be pre-printed before assembly. For example, the sleeve may be printed with a brand name or logo to correspond with a beverage on offer at a retail outlet. The sleeve may further comprise a window in at least one panel, arranged to enable the contents of the beverage pouch to be seen.

The pouch is preferably made of transparent or translucent material and the sleeve arranged so that, when the pouch is filled in the sleeve, the customer can see the contents of the pouch through the window as the pouch is being filled. This may add to the "theatre" of dispense, especially where dispense is accompanied by a change in the characteristics of the product in the pouch, for example where ice or other special effects are created in the product. In a preferred arrangement, the sleeve is provided with windows in front and rear panels. With this arrangement, the contents of the pouch can be illuminated with light from the side remote from the customer and this may further enhance the "theatre" of dispense. Alternatively or additionally, the sleeve may be provided with a reflective or other suitable surface onto which an image or other special effect can be displayed to the customer while dispensing a product to enhance the "theatre" of dispense. Alternatively or additionally, the sleeve may incorporate temperature responsive materials that change colour (thermochromic materials) or some other change to the appearance of the sleeve when a cold or hot product is added to the pouch thereby creating a visual effect to enhance the "theatre" of dispense.

The sleeve may be configured to fit in a carrier and the carrier may be capable of supporting a plurality of sleeves having pouches located therein. For example, the carrier may comprise a tray having recesses in which the base end of the sleeve is received to support the sleeve. In this way, several pouches may be carried in a safe and convenient manner that reduces the risk of the contents of the pouches being spilled.

The pouch may comprise a flexible bag of a food-grade material provided with a neck or spout through which the flowable bulk material can be introduced to fill the pouch and withdrawn to consume the flowable bulk material. The neck or spout may be provided with a closure to retain the flowable bulk material in the pouch until it is desired to consume the flowable bulk material. The closure may comprise a screw cap, flip-top cap, sports cap, push-fit cap or any other suitable closure device. The closure may be re-closable to allow the neck or spout to be closed when the contents of the pouch have been partially consumed. The closure mary be configured to allow the pouch to be employed with automatic pouch filling equipment.

The bulk flowable material may be a beverage, for example an alcoholic beverage such as beer, lager, cider, wine, spirits (with or without a mixer), alcopop, cocktail or a non-alcoholic beverage such as still or carbonated water with or without additional flavouring, or fruit juice. The beverage may be chilled for dispense into the pouch. The beverage may be a semi-frozen beverage sometimes referred to as a slush beverage. The semi-frozen beverage may be formed by partially freezing the beverage to produce an ice content prior to filling the pouch. Alternatively or additionally, the semi-frozen beverage may be formed in the pouch. For example we may dispense a supercooled beverage and subject the beverage to a shock such as by ultrasonics, injection of carbon dioxide gas or other additive that will cause ice crystals to nucleate in the supercooled fluid when the beverage is dispensed and/or when the beverage is in the pouch to cause formation of an ice content. Alternatively or additionally, we may add an ice slurry to the beverage when the beverage is dispensed and/or when the beverage is in the pouch. The beverage may be a hot beverage such as tea, coffee, chocolate. Other consumable flowable hot or cold products that may be contained in the pouch include soups, milkshakes, ice cream, sorbet etc.

According to a still further aspect of the invention, there is provided a method of serving a flowable bulk material as defined in claim 11.

The flowable bulk material may be a chilled beverage or a partially or semi frozen beverage - often referred to as slush beverage - or alternatively may be a hot beverage. Where the flowable bulk material is a beverage, it may be a still beverage or a carbonated beverage and it may be an alcoholic beverage or a non-alcoholic beverage.

Preferred embodiments of the invention will now be described, with reference to the accompanying drawings, in which;
Figure **1** is a front view of an assembled sleeve and beverage pouch;
Figure 2 shows a blank for constructing the sleeve of Figure 1;
Figure 3 is a front view of an assembled sleeve with a viewing window;
Figure 4 is a front view of an alternative assembled sleeve; and
Figure 5 shows a blank for constructing the sleeve of Figure 4.

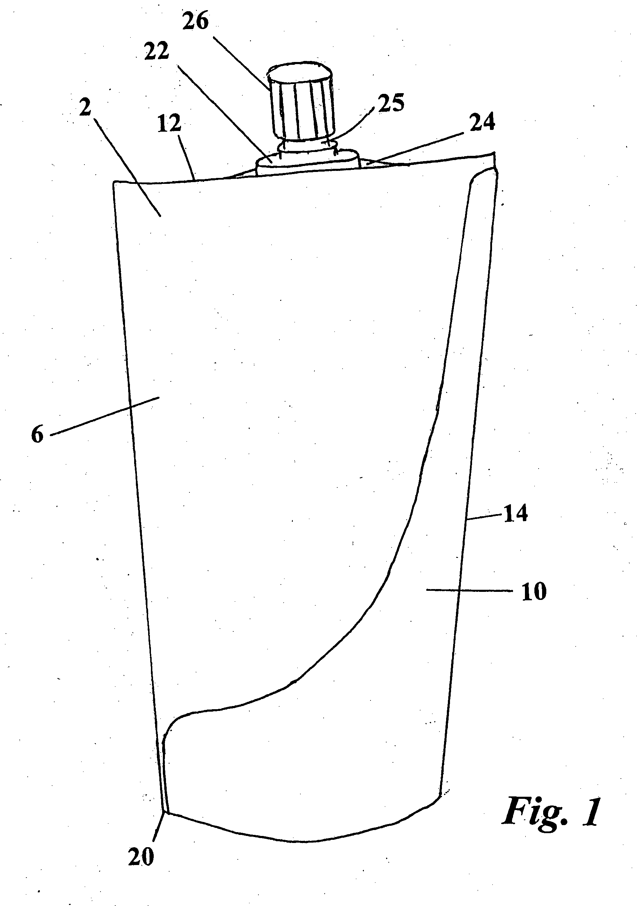

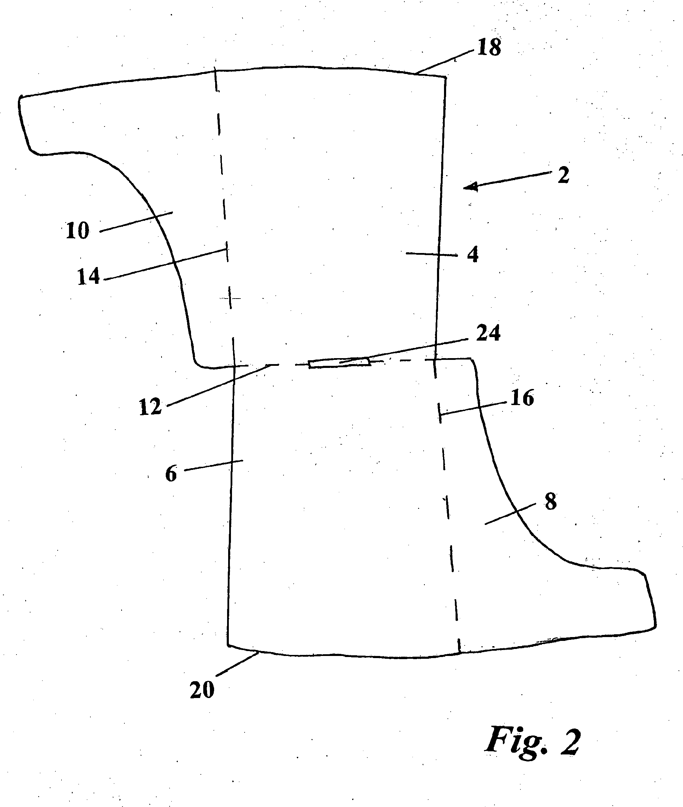

Referring to Figures 1 and 2, according to a first embodiment of the invention, a beverage pouch sleeve 2 comprises a single sheet of folded cardboard. The sleeve comprises a front panel 6, a back panel 4 and two shaped panels 8, 10. The front and back panels, 6,4 are joined at a top edge and folded about a score line 12 until the bottom edge 18 of the back panel 4 is substantially level with the bottom edge 20 of the front panel 6. One shaped panel 10 extends from a side edge of the back panel 4 and is folded about a score line 14 until it overlaps the front panel 6. Similarly, a shaped panel 8 extends from a side edge of the front panel 6 and is folded about a score line 16 until it overlaps the back panel 4.

The shaped panels 8, 10 are secured to the outer faces of the front and back panels 6, 4 and the bottom edges of the front and back panels 6, 4 are left open. The assembled sleeve defines a cavity into which a beverage pouch 22 can be inserted. The outer faces of the sleeve 2 are printed with a design or brand name corresponding to a beverage on sale in a particular retail outlet. The cardboard is die-cut and pre-printed before assembly into the sleeve.

In this embodiment, the panels 8,10 are provided with one or more stripes of adhesive (not shown) such as a contact adhesive by means of which the panels 8, 10 are adhered to the outer faces of the panels 6, 4. The adhesive stripes may be provided with a protective cover strip that is removed when the sleeve is to be assembled. Any other suitable means may be employed to secure the panels 8, 10 to the panels 6, 4. For example, the panels 8, 10 may be secured to the panels 6, 4 by engagement of interlocking formation such as tongues or tabs in slots.

The sides of the front and back panels 6, 4 are tapered outwards towards the bottom so that, in use, the open base is a substantially oval shape. This provides a stable base enabling the sleeve to be stood on a surface.

A slit 24 is cut along the score line 12 at a mid-way point and is arranged to allow the neck or spout 25 of the beverage pouch 22 to pass through the top edge of the sleeve. The neck or spout 25 is provided with a cap 26, for example a screw cap, that can be removed when the pouch is to be filled and attached to seal and retain the contents within the pouch 22. The cap 26 can be removed when the contents of the pouch are to be consumed and may be re-attached to re-seal the pouch if the contents are only partially consumed. The slit 24 may be configured to co-operate with the neck or spout 25 to retain the pouch 22 in the sleeve 2. For example the neck or spout 25 may be a snap fit in the slit 24.

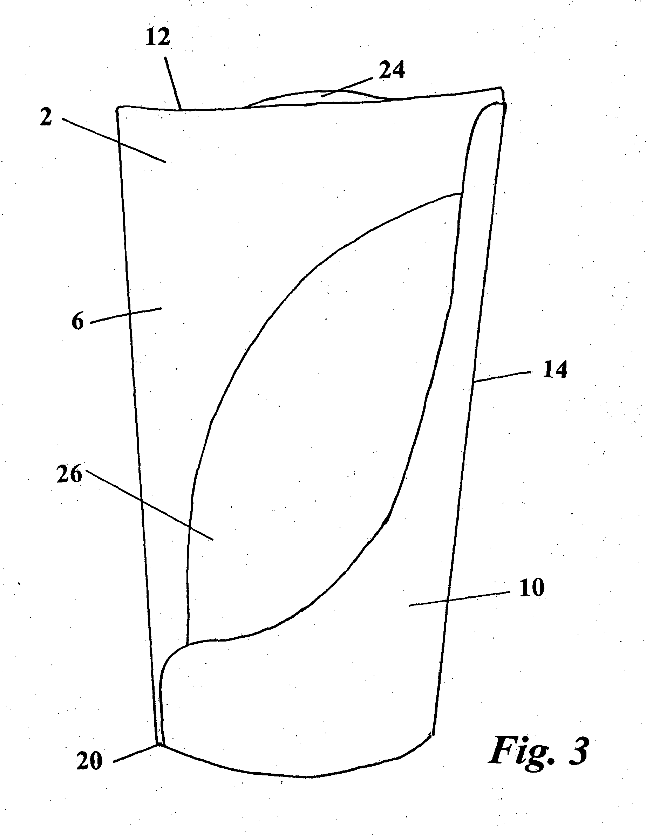

Referring to Figure 3, in an alternative embodiment of the invention, the sleeve 2 includes a window 27 in at least one face, for example the front face 6 of the sleeve. The front panel 6 is shaped to mirror the shape of the shaped panel 10 such that, when assembled, the shaped edges of the two panels 6, 10 define a window allowing the contents of the pouch to be seen.

In use, the beverage pouch 22 is filled with a selected beverage from a dispensing machine in a retail outlet. The pouch may be filled by hand or automatically. For example the pouch may be fed to a filler head part of an automated pouch filling system where the cap 26 is removed, the beverage dispensed into the pouch and the cap 26 re-attached. The retailer then selects the sleeve 2 corresponding to the selected beverage and slides the sleeve 2 over the filled pouch before handing to the customer. Alternatively, the filled pouch and sleeve may be dispensed in a vending machine.

The sleeves 2 and pouches 22 may be delivered flat-packed to the retail outlet, which considerably reduces the amount of storage space required. A sleeve 2 can then be erected on site as and when required. Sleeves with a number of different designs, brands or logos printed can be stored, to correspond with the range of beverages offered by the retailer. This system allows the beverages to be stored in chilled dispensers and dispensed as required, which is much more economical in the amount of storage space required than pre-filled bottles in refrigerated cabinets. This therefore reduces the amount of energy required to chill the beverages and allows a greater range of beverages to be stocked.

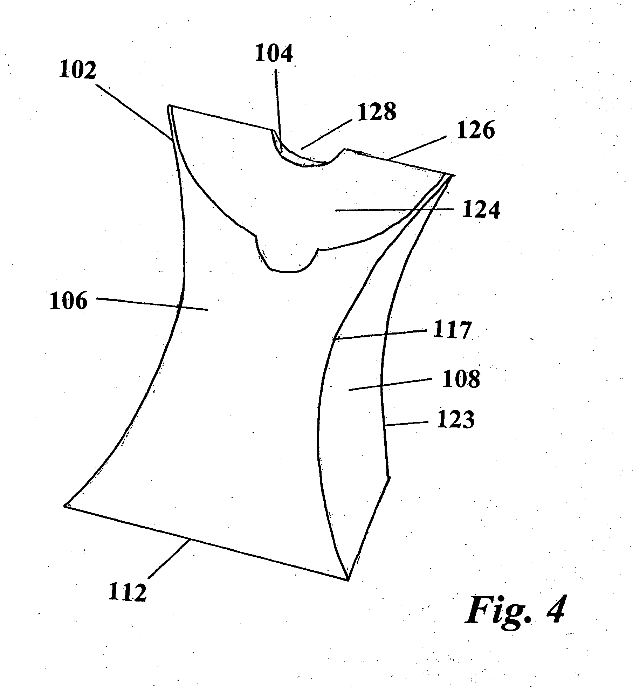

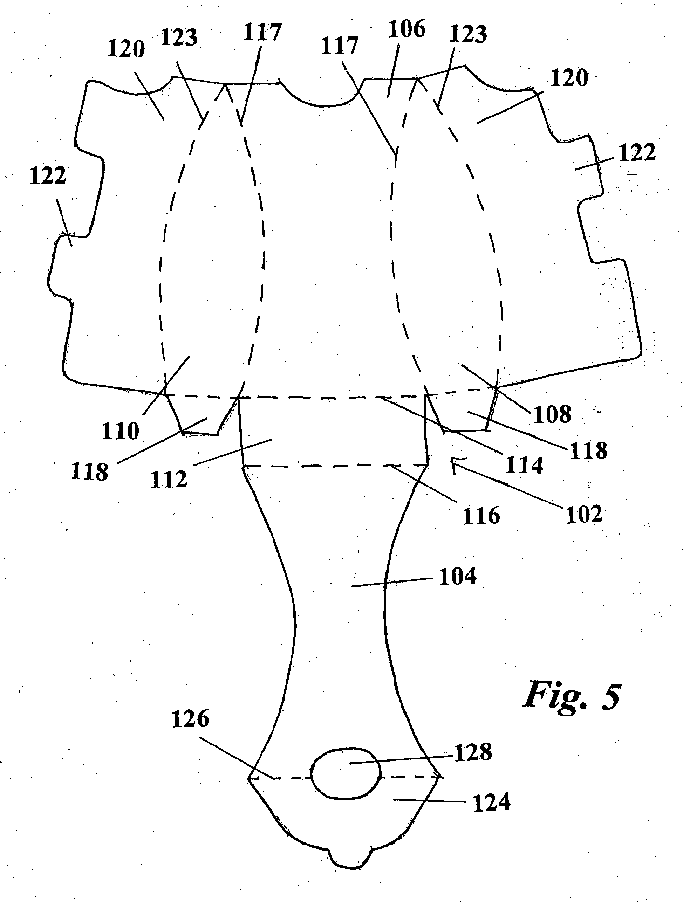

Referring to Figures 4 and 5, in an alternative embodiment of the invention, the sleeve 102 comprises a front panel 106 attached along its bottom edge defined by a score line 114 to a rectangular base panel 112, which in turn is joined along a score line 116 to a back panel 104. The front and back panels are shaped to have curved sides, curved inwardly from the base to substantially halfway along the length of the panel and then outwardly towards the top. This shaping makes the assembled sleeve more comfortable to hold. The front and back panels are folded about the score lines to extend upwards from the base 112.

Two side panels 108, 110 extend from either side of the front panel 106 and are arranged to fold about score lines 117. The side panels are shaped to correspond with the shaping of the front and back panels and come to a point at the top. The base edges of the side panels 108, 110 correspond to the side edges of the base panel 112 and, when assembled, tabs 118 extending from the base of the side panels are secured to the base panel 112 by adhesive or other suitable means. The solid base 112 provides a stable sleeve that can be stood on a surface.

Tab portions 120 also extend from each of the side panels 108, 110 and are arranged to fold about score lines 123. Tabs 122 are arranged to interlock to form a back portion. The back panel 104 is then folded up behind the interlocking tabs, concealing them.

A flap 124 extends from the top of the back panel 104, is folded over the top of the sleeve about score line 126, and is secured to the front panel 106 by adhesive or other suitable means. This secures each of the panels in their place, forming a box-like sleeve 102. A hole 128 is cut along score line 126 between the back panel 104 and the flap 124 to allow the neck or spout of a beverage pouch to project outside of the sleeve 102 for attaching the cap.

In use, a beverage pouch is filled with a selected beverage as described above and inserted into the appropriate sleeve 102. In this embodiment, the sleeve may be supplied assembled with an unfilled pouch within the sleeve and a beverage may be dispensed into the pouch through the neck or spout extending through the hole 128 in the sleeve with the cap removed and the cap attached to seal and retain the product in the pouch. Alternatively, the sleeve may be supplied unassembled and is assembled around a filled or unfilled pouch or may be supplied partially assembled, the pouch filled and placed into the partially assembled sleeve, and the remainder of the sleeve assembled around the pouch. For example, the flap 124 may be left open to allow the pouch to be inserted into the sleeve 102 before securing the flap 124 to the front panel 106 by adhesive or other suitable means.

In addition to reducing storage space, the sleeve acts as a thermal insulator trapping a layer of air between the beverage pouch and the sleeve. This allows both hot and cold drinks to be dispensed into the pouch and handled safely. The cardboard may be corrugated to further improve the insulation provided by the sleeve.

Cardboard is easily compressed and this allows more viscous products such as ice cream or milkshake to be dispensed into the pouch and squeezed out. The use of the pouch, which is enabled by the sleeve, is also more hygienic since there is limited handling and no oxidisation and also minimises the risk of carbonated drinks going flat. Furthermore, the production of waste is minimised and the cost of packaging production is competitive. Dispensing beverages on site also provides the retailer with a higher profit.

It will be appreciated that the sleeves can be produced in a range of sizes, to accommodate pouches of varying portion sizes. For example, pouches may be 150ml, 200ml, 330ml, 400ml, 1 litre, 3 litres or any other suitable size. The sleeves may also be produced in a variety of shapes. The shape may be distinctive of the type of beverage contained within the pouch or of the brand of the beverage.

It will also be appreciated that the sleeve may be used in combination with pouches of a variety of different shapes, sizes and materials. Furthermore, the pouches may comprise one of a number of different closing means, for example a screw cap, a sports cap or a seal. Alternatively, the pouch may comprise an opening means that is independent of an opening used for filling the pouch, such as a punch hole for use with a straw.

As described herein the flowable bulk material may be a chilled beverage or a partially or semi frozen beverage - often referred to as slush beverage - or alternatively may be a hot beverage. Partially or semi-frozen beverages may have an ice content formed from the beverage itself or by the addition of an ice slurry to the beverage. The ice content may be formed before, during or after filling the pouch with the beverage. The beverage may be a still beverage or a carbonated beverage and it may be an alcoholic beverage or a non-alcoholic beverage. The flowable bulk material may be a food product such as soup, ice cream, sorbet.

The invention has application for packaging and serving alcoholic and non-alcoholic drinks. Alcoholic drinks may include beer, lager, cider, wine, alcopops such as Bacardi Breezer (RTM), Smirnoff Ice (RTM), spirits and combinations of a spirit and mixer, for example gin and tonic. Non-alcoholic drinks may include still or carbonated water with or without additional flavourings, fruit juices, fruit drinks such as J20 (RTM), and other hot or cold drinks. Beverages may have a range of viscosities from low viscosity products such as liquids to high viscosity semi-solid or paste-like products such as milkshakes. Both alcoholic and non-alcoholic drinks may be provided with an ice content either formed from the drink itself or by mixing ice or an ice slurry with the beverage. An ice content may be formed from the drink itself by freezing the drink in a freeze cylinder or similar apparatus or by dispensing the drink in a super-cooled condition and subjecting it to a shock by ultrasonics or other suitable means such as injection of carbon dioxide gas or other additive that will cause a phase change creating ice in the drink.

It will be understood that the invention is not limited to the embodiment above-described. For example, the sleeve may be pre-printed with product specific information for selection and use of the appropriate sleeve when dispensing a beverage. Alternatively, the sleeve may be blank or pre-printed with non-product specific information and the product specific information applied to the sleeve when the beverage is dispensed. For example the product specific information may be printed on the sleeve or on a label to be attached to the sleeve. In some applications not forming part of the invention, the sleeve may be omitted and the product specific information applied to the pouch, for example by printing on the pouch or printing a label to be attached to the pouch.

Although the invention has particular application to beverages, it may also be used to package and serve other flowable bulk materials, including food products such as soups, ice cream, sorbet which may vary from a low viscosity to a high viscosity.

Other applications of the invention will be apparent to those skilled in the art.

## Claims

1. A sleeve (2; 102) for a pouch (22) for a flowable bulk material, the sleeve (2;102) having a front panel (6;106) and a back panel (4;104) configured to define a cavity arranged to receive a pouch (22) **characterised in that** the front panel (6,106) and back panel (4;104) are joined at one end of the sleeve (2,102) and a slit (24) or a hole (128) is provided along a score line (12;126) at said one end to allow a neck or spout (25) of a pouch (22) received in the sleeve (2;102) to project outside of the sleeve (2; 102) for attaching a cap (26).

2. A sleeve according to claim 1, wherein the sleeve (2;102) is flexible and self-supporting, and comprises a single sheet of a material defining a plurality of panels (4,6,8,10;104,106,108,110,112) for assembly of the sleeve (2;102).

3. A sleeve according to claim 1 or claim 2, wherein the cavity is open at a base end of the sleeve (2) for receiving a pouch (22) and the slit (24) is arranged to co-operate with a neck or spout (25) of a pouch (22) received in the sleeve (2) to retain the pouch (22) in the sleeve (2).

4. A sleeve according to claim 3 wherein a neck or spout (25) of a pouch (22) received in the sleeve (2) is a snap-fit in the slit (24).

5. A sleeve according to claim 3 or claim 4, wherein sides of the sleeve (2) taper out towards the base end of the sleeve (2).

6. A sleeve according to claim 1 or claim 2 wherein the sleeve (102) is narrower at a centre portion than at either the top or bottom.

7. A sleeve according to claim 6 wherein the sleeve (102) has side panels (108,110) between the front and back panels (106,104) that curve inwardly from the top and bottom of the sleeve (102).

8. A sleeve according to claim 6 or claim 7 wherein the sleeve (102) has a base panel (112).

9. A sleeve according to any preceding claim, further comprising a window (27) arranged to enable the contents of the beverage pouch to be seen.

10. Packaging for a flowable bulk material comprising a sleeve (2;102) according to any preceding claim and a pouch (22) received in the sleeve (2;102).

11. A method of serving a flowable bulk material comprising the steps of selecting a flowable bulk material, dispensing the flowable bulk material into a pouch (22), selecting a sleeve (2;102) corresponding to the selected flowable bulk material and inserting the pouch (22) into a cavity in the sleeve (2;102) **characterised by** providing the sleeve (2;102) with a front panel (6,106) and a back panel (4;104) joined at one end of the sleeve (2,102) and providing a slit (24) or a hole (128) along a score line (12;126) to allow a neck or spout (25) of the pouch (22) received in the sleeve (2;102) to project outside of the sleeve (2;102) for attaching a cap (26).

## Patentansprüche

1. Eine Hülse (2; 102) für einen Beutel (22) für ein fließfähiges Füllgut, die Hülse (2; 102) mit einer Vorderseite (6; 106) und einer Rückseite (4; 104), die so gestaltet sind, dass sie einen Hohlraum definieren, der so angeordnet ist, dass er einen Beutel (22) aufnehmen kann, dadurch charakterisiert, dass die Vorderseite (6, 106) und die Hinterseite (4; 104) an einem Ende der Hülse (2, 102) verbunden sind, und ein Spalt (24) oder ein Loch (128) entlang einer Kerblinie (12; 126) an besagtem einen Ende vorhanden ist, um einen Stutzen oder Ausguss (25) eines Beutels (22), der in die Hülse (2;102) gesteckt wird, aus der Hülse (2; 102) herausragen zu lassen, um eine Kappe (26) darauf zu befestigen.

2. Eine Hülse gemäß Anspruch 1, wobei die Hülse (2; 102) flexibel und selbsttragend ist und ein Einblattmaterial umfasst, das eine Vielzahl von Abschnitten (4, 6, 8, 10; 104, 106, 108, 110, 112) für die Zusammensetzung der Hülse (2; 102) definiert.

3. Eine Hülse gemäß Anspruch 1 oder Anspruch 2, wobei der Hohlraum an der Unterseite der Hülse (2) offen ist, um einen Beutel (22) aufzunehmen, und der Spalt (24) so angeordnet ist, dass er mit einem Stutzen oder Ausguss (25) eines Beutels (22), der in die Hülse (2) gesteckt wird, zusammenwirkt, um den Beutel (22) in der Hülse (2) zu halten.

4. Eine Hülse gemäß Anspruch 3, wobei der Stutzen oder der Ausguss (25) eines Beutels (22), der in die Hülse (2) gesteckt wird, eine Schnappverbindung im Spalt (24) aufweist.

5. Eine Hülse gemäß Anspruch 3 oder Anspruch 4, wobei die Seiten der Hülse (2) zum Unterteil der Hülse (2) schmaler werden.

6. Eine Hülse gemäß Anspruch 1 oder Anspruch 2, wobei die Hülse (102) im Mittelteil schmaler ist als an der Ober- oder Unterseite.

7. Eine Hülse gemäß Anspruch 6, wobei die Hülse (102) Seitenabschnitte (108, 110) zwischen der Vorder- und Hinterseite (106, 104) aufweist, die sich von der Ober- und Unterseite der Hülse (102) nach innen wölben.

8. Eine Hülse gemäß Anspruch 6 oder Anspruch 7, wobei die Hülse (102) eine Unterseite (112) aufweist.

9. Eine Hülse gemäß eines der vorhergehenden Ansprüche, darüberhinaus bestehend aus einem Fenster (27), das so angeordnet ist, dass der Inhalt des Getränkebeutels zu sehen ist.

10. Eine Verpackung für ein fließfähiges Füllgut, bestehend aus einer Hülse (2; 102), gemäß eines der vorhergehenden Ansprüche, und eines Beutels (22), der in die Hülse (2; 102) gesteckt wird.

11. Ein Verfahren zur Bereitstellung eines fließfähigen Füllgutes, bestehend aus den Schritten der Auswahl eines fließfähigen Füllgutes, dem Einfüllen des fließfähigen Füllgutes in einen Beutel (22), der Auswahl einer Hülse (2; 102) entsprechend des ausgewählten fließfähigen Füllgutes und Hineinstecken des Beutels (22) in einen Hohlraum in der Hülse (2; 102), charakterisiert durch die Ausstattung der Hülse (2; 102) mit einer Vorderseite (6, 106) und einer Rückseite (4; 104), die an einem Ende der Hülse (2, 102) zusammengefügt sind und Bereitstellung eines Spalts (24) oder eines Lochs (128) entlang einer Kerblinie (12; 126), um einen Stutzen oder Ausguss (25) eines Beutels (22), der in die Hülse (2;102) gesteckt wird, aus der Hülse (2; 102) herausragen zu lassen, um eine Kappe (26) darauf zu befestigen.

## Revendications

1. Un manchon (2, 102) pour une poche (22) pour un matériau en vrac fluidifiable, le manchon (2, 102) possédant un panneau avant (6, 106) et un panneau arrière (4, 104) configurés de façon à définir une cavité agencée de façon à recevoir une poche (22), **caractérisé en ce que** le panneau avant (6, 106) et le panneau arrière (4, 104) sont joints au niveau d'une extrémité du manchon (2, 102), et une fente (24) ou un trou (128) est fourni le long d'un trait de coupe (12, 126) au niveau de ladite une extrémité de façon à permettre à une encolure ou un bec verseur (25) d'une poche (22) reçue dans le manchon (2, 102) de faire saillie vers l'extérieur du manchon (2, 102) pour la fixation d'un capuchon (26).

2. Un manchon selon la Revendication 1, où le manchon (2, 102) est flexible et autoporteur et comprend une feuille unique d'un matériau définissant une pluralité de panneaux (4, 6, 8, 10, 104, 106, 108, 110, 112) pour un assemblage du manchon (2, 102).

3. Un manchon selon la Revendication 1 ou 2, où la cavité est ouverte au niveau d'une extrémité de base du manchon (2) de façon à recevoir une poche (22) et la fente (24) est agencée de façon à coopérer avec une encolure ou un bec verseur (25) d'une poche (22) reçue dans le manchon (2) de façon à retenir la poche (22) dans le manchon (2).

4. Un manchon selon la Revendication 3 où une encolure ou un bec verseur (25) d'une poche (22) reçue dans le manchon (2) est encliquetable dans la fente (24).

5. Un manchon selon la Revendication 3 ou 4, où des côtés du manchon (2) s'amincissent en biseau vers l'extrémité de base du manchon (2).

6. Un manchon selon la Revendication 1 ou 2 où le manchon (102) est plus étroit au niveau d'une partie centrale qu'au niveau de soit la partie supérieure ou la partie inférieure.

7. Un manchon selon la Revendication 6 où le manchon (102) possède des panneaux latéraux (108, 110) entre le panneau avant et le panneau arrière (106, 104) qui s'incurvent vers l'intérieur à partir de la partie supérieure et de la partie inférieure du manchon (102).

8. Un manchon selon la Revendication 6 ou 7 où le manchon (102) possède un panneau de base (112).

9. Un manchon selon l'une quelconque des Revendications précédentes, comprenant en outre une fenêtre (27) agencée de façon à permettre au contenu de la poche de boisson d'être vu.

10. Un conditionnement pour un matériau en vrac fluidifiable comprenant un manchon (2, 102) selon l'une quelconque des Revendications précédentes et une poche (22) reçue dans le manchon (2, 102).

11. Un procédé de desserte d'un matériau en vrac fluidifiable comprenant les opérations suivantes : la sélection d'un matériau en vrac fluidifiable, la distribution du matériau en vrac fluidifiable vers une poche (22), la sélection d'un manchon (2, 102) correspondant au matériau en vrac fluidifiable sélectionné et l'insertion de la poche (22) dans une cavité dans le manchon (2, 102), **caractérisé par** l'équipement du manchon (2, 102) avec un panneau avant (6, 106) et un panneau arrière (4, 104) joints au niveau d'une extrémité du manchon (2, 102) et la fourniture d'une fente (24) ou d'un trou (128) le long d'un trait de coupe (12, 126) de façon à permettre à une encolure ou un bec verseur (25) de la poche (22) reçue in le manchon (2, 102) de faire saillie à l'extérieur du manchon (2, 102) pour la fixation d'un capuchon (26)
